Europäisches Patentamt

European Patent Office

Office européen des brevets

(11) Publication number: **0 391 731**
**A2**

# EUROPEAN PATENT APPLICATION

(21) Application number: **90303715.8**

(22) Date of filing: **06.04.90**

(51) Int. Cl.⁵: **C08L 67/02, C08K 13/02,**
**//(C08L67/00,27:18)**

(30) Priority: **07.04.89 JP 89140/89**

(43) Date of publication of application:
**10.10.90 Bulletin 90/41**

(84) Designated Contracting States:
**AT BE CH DE DK ES FR GB GR IT LI LU NL SE**

(71) Applicant: **POLYPLASTICS CO. LTD.**
**3-13, Azuchicho, 2-chome**
**Chuo-Ku Osaka-shi Osaka(JP)**

(72) Inventor: **Kitamura, Hiroshi**
**2272-2 Imaizumi**
**Fuji-shi, Shizuoka(JP)**

(74) Representative: **Jackson, Peter et al**
**HYDE, HEIDE & O'DONNELL 10-12 Priests**
**Bridge**
**London SW15 5JE(GB)**

(54) **Flame-retardant polyester resin composition and process for the preparation thereof.**

(57) Flame-retardant and drip-resistant polyester resin compositions include a blend of flame-retardant thermoplastic polyester resin, and granular suspension-polymerized PTFE (PTFE) resin. The polyester resin may be inherently non-flame-retardant, in which case a sufficient amount of at least one halogenated flame retardant is present so as to impart flame-retardant properties to the composition. Alternately, the polyester resin may include halogen atoms in its molecular structure. The suspension-polymerized PTFE is advantageously present in an amount sufficient to impart high drip resistant to the compositions in accordance with UL Standard 94.

# FLAME-RETARDANT POLYESTER RESIN COMPOSITIONS AND PROCESS FOR PREPARING THE SAME

The present invention relates to flame-retardant polyester resin compositions and processes for their preparation. More particularly, the present invention provides, at low cost, a high quality resin composition which exhibits improved extrudability without adversely affecting the composition's excellent mechanical and flame-retardant properties.

Thermoplastics polyester resins, such as polyalkylene terephthalate resins have been used as engineering plastics in various fields, including components for automobiles and electrical and electronic appliances, due to the resin's excellent mechanical and electrical properties in addition to its excellent physical and chemical characteristics.

Thermoplastic polyester resins intended to be used in applications where flame retardance is required, such as electrical components, have conventionally been rendered flame-retardant either by the addition of an organic halogenated flame-retardant and an auxiliary flame-retardant, or by incorporating a flame-retardant group into the molecular structure of the resin. Furthermore, thermoplastic polyester resin compositions to be used in some fields are required to satisfy the high drip resistance ($V_0$) requirements of Underwriters' Laboratories Standard 94 (UL-94) - that is, the composition must not "drip" molten resin when exposed to a flame.

As a means to inhibit dripping of molten resin, it has been proposed to use polytetrafluoroethylene (PTFE) together with a flame-retardant or the like (see Japanese Patent Publications No 30024/1980). However, conventional PTFE, for example, of the type described in the above-cited Japanese Patent Publication No 30024.1980 as a preferred example (i.e. Teflon® type 6, DuPont) easily flows when subject to minimal shear force. Thus, problems (as will be described below) occur during the blending of the PTFE with a thermoplastic polyester resin. As a result, the composition of Japanese Patent Publication No 30024/1980 does not have entirely satisfactory processing characteristics even though conventional PTFE blended with thermoplastic polyester resin is effective to inhibit dripping of molten resin upon exposure to flame.

More specifically, when PTFE is mixed with a polyester resin, a flame-retardant and the like, the PTFE is mixed with a polyester resin, a flame-retardant and the like, the PTFE is mixed with a polyester resin, a flame-retardant and the like, the PTFE agglomerates or spreads in a fibrous state and/or causes agglomeration of the other components in the resin blend. Therefore, the mixture adheres to the wall of the processing equipment, such as extruders or transport pipes, to form an obstructing mass. Such a phenomenon deleteriously affects the functioning of the processing equipment due to PTFE strand surging and/or breaking caused by poor extruder "bite". Thus, significant equipment overhaul and/or modification is sometimes necessary resulting in equipment down time and thus lowered productivity.

In order to solve these problems, it has been proposed to prepare polyester resin compositions containing PTFE by a two-stage blending process. According to this prior proposal, PTFE is preliminarily mixed with a polyester resin powder nd a flame-retardant so as to obtain a master batch. The master batch is then mixed with the residual polyester resin pellets and proves the raw material feed into a extruder. However, the two-stage process described above not only increases production costs but also is not conducive to continuous operations. Moreover, the two-stage process described above adversely affects the characteristics of the final resin composition, to an extent that it is of lower and/or inconsistent quality.

In this regard, the present invention is directed to solving the problems noted above (e.g. poor workability and inconsistent quality) with respect to the preparation of a PTFE-containing flame-retardant polyester resin composition, particularly when the PTFE is employed as a drip inhibitor. According to the present invention, it has been found that PTFE prepared by suspension polymerization is extremely effective as a drip-inhibiting agent, particularly when it is blended with a substantially flame-retardant thermoplastic polyester resin composition containing halogen atoms in its molecule.

The present invention broadly encompasses a flame-retardant polyester resin composition comprised of a blend of (A/B) a major amount of a flame-retardant thermoplastic base resin, and (C) a minor amount, but sufficient to inhibit dripping, of a suspension-polymerized PTFE (PTFE) resin. Preferably, the PTFE resin will be present in an amount between 0.05 and 5% by weight, based upon the total weight of the composition. (Unless indicated otherwise, all weight percentages hereinafter are expressed in terms of the total weight of the composition).

The term "flame-retardant" used hereinafter with reference to the thermoplastic polyester resin is intended to encompass not only thermoplastic polyester resins which are inherently non-flame-retardant, and thus which include a flame retardant blended therewith, but also thermoplastic polyester resins which are inherently flame-retardant in that they have a flame retardant as a part of their molecular structure.

Thus, the present invention provides a flame-retardant polyester resin composition comprising:

(A/B) a flame-retardant thermoplastic polyester resin, and

(C) 0.05 to 5% by weight (based on the total weight of the composition) of a suspension-polymerized polytetrafluoroethylene resin.

The invention also relates to a process for production of a flame-retardant polyester resin composition as defined above.

According to one embodiment of the present invention, a flame-retardant polyester resin composition (A/B) includes a blend of (A) a thermoplastic polyester resin, (B) 1 to 30 % by weight of an organic halogenated flame retardant compound, and (C) 0.05 to 5% by weight of a suspension-polymerized PTFE resin. Another embodiment of this invention includes a blend of (A′) a thermoplastic polyester resin having halogen atoms in its molecular structure, and 0.05 to 5% by weight of suspension-polymerized PTFE resin.

Preferably, the compositions of this invention will contain between about 65 to about 98.95% of the thermoplastic polyester base resin.

The thermoplastic polyester resin that may satisfactorily be used in the compositions of the present invention is a polyester prepared by the polycondensation reaction between a dicarboxylic acid and a dihydroxyl compound, and optionally a hydroxy carboxylic acid, or between hydroxy carboxylic acid, or between hydroxy carboxylic acids themselves. The beneficial effects achieved according to the present invention cab be attained using either homopolyesters or copolyesters.

Examples of the dicarboxylic acid that may be used in the preparation of the polyester resin component include conventional dicarboxylic acids such as terephthalic, isophthalic, naphthalenedicarboxylic, diphenyldicarboxylic, diphenyl ether dicarboxylic, diephenylethanedicarboxylic, cyclohexanedicarboxylic, adipic and sebacic acids and alkyl-, alkoxy- or halogen-substituted derivatives thereof. These dicarboxylic acids and derivatives thereof may be each used as an ester-forming derivative thereof, for example, an ester thereof with a lower alcohol, such a dimethyl ester. Two or more such compounds may be used simultaneously.

Examples of the dihydroxyl compound that may be employed in preparing the polyester resin component include dihydroxyl compounds such as ethylene glycol, propylene glycol, butanediol, neopentyl glycol, hydroquinone, resorcinol, dihydroxyphenyl, naphthalenediol, dihydroxydiphenyl ether, cyclohexanediol, 2,2-bis(4-hydroxyphenyl)-propane and diethyoxylated bisphenol A; and polyoxyalkylene glycols and alkyl-, alkoxy- or halogen-substituted derivatives thereof. These compounds may be used alone or as a mixture of two or more the same.

Preferred hydroxy carboxylic acids include hydroxybenzoic acid, hydroxynaphthoic acid and diphenylenehydroxycarboxylic acid and and alkyl-, alkoxy- or halogen-substituted derivatives thereof. Further, ester-forming derivatives of these compounds may be used. According to the present invention, one or more of the compounds described above may be used.

According to the present invention, a small amount of a trifunctional monomer may be used in addition to the above components to thereby prepare a polyester having a branched or crosslinked structure. Preferred trifunctional monomers include trimellitic, trimesic and pyromellitic acids, pentaerythritol and trimethylolpropane.

According to the present invention, any thermoplastic polyester prepared by the polycondensation of the monomer components as described above may be used as the polyester resin component. Although the thermoplastic polyester resins thus prepared may be used alone or as a mixture of two or more of the same, it is preferable to use a polyalkylene terephthalate. It is still more preferable to employ polybutylene terephthalate, or a copolymer mainly composed of polybutylene terephthalate.

The organic halogenated flame-retardant component (B) to be added to the thermoplastic polyester resin component (A) according to the present invention may be any halogenated organic compound which is generally used as a flame-retardant for thermoplastic polyesters. Brominated aromatic compounds are preferred, however. Particular examples thereof include low-molecular-weight brominated compounds, such as diphenyl ethers having 5 to 10 bromine substituents, low-molecular-weight organic halogen compounds of tetrabromobisphenol A, halogenated polycarbonate (such as polycarbonate oligomer prepared from brominated bisphenol A), halogenated epoxy compounds (such as diepoxy compounds prepared by the reaction of brominated bisphenol A with epichlorohydrin or monoepoxy compounds prepared by the reaction of brominated phenols with epichlorohydrin), brominated polystyrene and brominated bisimide compounds (such as (lower alkylene) bistetrabromophthalimide). These organic halogenate flame-retardants may be used alone, or a mixture of two or more of them.

It is preferable that the amount of the organic halogenated flame-retardant component (B) be as small as possible, because the addition of such a component in large amounts lowers the mechanical properties of the composition. The amount of the halogenated flame-retardant (B) that may be added to the polyester resin (A) is generally 1 to 30% by weight, and preferably 3 to 25% by weight.

The thermoplastic polyester resin that contains halogen atoms in its molecule (i.e. component (A')) is preferably a substantially flame-retardant aromatic polyester copolymer containing halogen atoms bonded thereto. Such a polyester resin is prepared using halogen-containing ester-forming compounds in addition to dicarboxylic acid and dihydroxyl compounds described above with reference to the thermoplastic polyester resin component (A). The halogen-containing monomer that may be used to impart flame retardance is particularly preferably a bromine compound.

Examples of preferred bromine compounds include tetrabromobisphenol A, tetrabromobisphenol sulfone, tetrabromobisphenol F, adduct of tetrabromobisphenol A with 2 mol of ethylene oxide, adduct of tetrabromobisphenol A with 2 mol of propylene oxide, adduct of tetrabromobisphenol sulfone with 2 mol of propylene oxide, tetrabromohydroquinone, adduct of tetrabromohydroquinone with 2 mol of ethylene oxide, tetrabromoterephthalic acid and polycarbonate of tetrabromobisphenol A.

The halogen-containing monomer is added in such an amount as to give a halogen content in the copolyester (A') of between about 0.5 to 30% by weight, preferably between about 2 to 20% by weight based upon the weight of the polyester resin. If the halogen content is less than 0.5% by weight, insufficient flame retardance will be attained. On the other hand, the mechanical properties of the composition will be deleteriously lowered.

It is not always necessary to physically blend a flame-retardant thermoplastic component (B) to a substantially flame-retardant thermoplastic resin (A') containing halogen atoms in its molecule. In other words, if a flame-retardant thermoplastic resin (A') having halogen atoms in its molecular structure is employed, then physically blending a halogenated flame-retardant compound (B) is not absolutely required, but it may be present if desired.

The compositions according to the present invention also preferably contain an auxiliary flame-retardant in addition to the above-described essential components. Examples of preferred auxiliary flame-retardants include oxides and hydroxides of metals, such as antimony trioxide, antimony tetroxide, antimony pentoxide, antimony halide, aluminium hydroxide and tin dioxide. The amount of the auxiliary flame-retardant that may be added is about 0 to 15% by weight, based on the total amount of the composition.

The compositions of the present invention are especially characterized by the presence of a PTFE resin (C) prepared by suspension polymerization. The PTFE resin (C) that is used in the present invention is thus essentially characterized by being prepared according to suspension polymerization processing techniques, and not by emulsion polymerization techniques. Although PTFE may be prepared by emulsion, suspension or bulk polymerization techniques, it has been found that the use of suspension-polymerized PTFE resin is critically required in order to achieve the benefits of this invention. It has thus been found that little functional improvement is realized by the use of a PTFE resin prepared by emulsion polymerization. On the other hand, PTFE resin prepared by suspension polymerization is surprisingly free from the above-noted problems and is substantially different in its effect as compared by PTFE resin prepared by emulsion polymerization.

Although the reasons for these functional differences are not fully understood at this time, it is presumed that the larger size of primary particles that ensues from suspension polymerization is a dominant reason. That is, the primary particle size of PTFE prepared by suspension polymerization is generally on average about 200μm or greater. Moreover, this comparatively large-sized particle cannot be reduced in size to 1μm or less even by grinding. The primary particle size of PTFE resin prepared by emulsion polymerization is, however, 1μm or less. Thus, problems ensue due to the size of the primary particle obtained by emulsion polymerization, even though the effective size of such primary particles may be increased by agglomeration. This inherent difference between the primary particle sized of suspension-polymerized and emulsion-polymerised PTFE resin is thus believed to cause differences in their respective handling characteristics. Particularly, preferred effects are achieved by using granules having a size of between 10 to 1000μm which have been prepared by grinding primary particles of suspension-polymerized PTFE resin into particle sizes of between 1 to 50μm, and then subsequently agglomerating these ground resin particles to the desired granule size.

Whatever the reasons may be, it has been ascertained that the use of suspension-polymerized PTFE effectively inhibits caking, adhesion and/or clogging of the resin mixture within the processing equipment, such as pipes, mixers, screw feeders, and hoppers. In addition, strand surging during preparation of the resin composition using conventional processing techniques and conventional processing equipment is inhibited. As a result, the compositions of the present invention exhibit not only improved physical characteristics, but also are of more consistent quality (thereby lowering resin rejection rates).

A bulk polymerization method of preparing the PTFE resin is disadvantageous since heat dissipation is difficult during polymerization, and since the obtained polymer is in lump form that must subsequently be pulverized.

4

Some PTFE resins prepared by suspension polymerization which may be used as component (C) of the present invention are commercially available. Examples include Hostaflon® TF 1620, IF 1640 mfd. by Hoechst and Teflon® 800-J and Teflon® 820-J mfd. by Mitsui Du Pont Fluorochemicals Co Ltd.

Alternatively, the PTFE resins (C) can be prepared by known suspension polymerization processes. That is, the suspension polymerization of tetrafluoroethylene can be carried out in an aqueous medium in the presence of an organic or inorganic peroxide at a temperature of about 0 to 150°C under a pressure of 0.3 to 100 MPa (3 to 1000 atma) in the substantial absence of an emulsifying agent. The primary particles of the PTFE thus prepared will have an average particle size of 200 to 300µm. Furthermore, the smaller sized particle after grinding the solution-polymerized primary particle is essentially different in therms of size as compared to the emulsion-polymerized primary particle which as a size of 1µm or less.

Although the suspension-polymerized PTFE may be added in an as-produced form or may be ground into a selected particle size prior to addition, it is preferable in terms of handleability, workability and physical properties, to use PTFE granules having an average size of between 10 t0 1000µm, particularly between about 100 to 800µm. The preferred granules to be used according to the present invention are those that have prepared by grinding the suspension-polymerized resin, and then agglomerating the ground resin.

The amount of the PTFE resin component (C) that is added to the polyester base resin is preferably between 0.05 to 5% by weight, and more preferably between 0.1 to 3% by weight, based on the total weight of the composition. If the amount of the PTFE resin component (C) is too small, the resulting composition will exhibit poor flame retardance, and particularly will not exhibit high drip resistance (Vo) when subjected to the burn test according to UL Standard 94. On the contrary, if the amount of the PTFE resin is too large, the physical properties of the resulting composition will be lowered unfavorably.

The addition to the compositions of the present invention of at least one inorganic filler (D), although not essential, is preferred for producing a molded article having excellent mechanical strength, heat resistance, dimensional stability (resistance to deformation and warpage) and electrical properties. The inorganic fillers (D) may be selected from among fibrous, powdery, granular and flaky fillers depending upon the resulting properties that are desired.

Suitable fibrous fillers include inorganic fibrous materials, for example, inorganic fibers formed of glass, asbestos, carbon, silica, silica/alumina, zirconia, boron nitride, silicon nitride, boron, and potassium titanate, as well as metal fibers formed of stainless steel, aluminium, titanium, copper or brass. Among them, glass fiber and carbon fiber are most preferred. Other suitable fibrous fillers include high-melting organic fibrous materials, particular examples thereof being polyamides and acrylic resins.

Examples of suitable powdery or granular fillers include carbon black, silica, quartz powder, glass beads, glass powder, silicates such as calcium silicate, aluminium silicate, kaolin, talc, clay, diatomaceous earth and wollastonite; metal oxides such as iron oxides, titanium oxide, zinc oxide and alumina; metal carbonates such as calcium carbonate and magnesium carbonate; metal sulfates such as calcium sulfate and barium sulfate; silicon carbide, silicon nitride, boron nitride and various metal powders.

Flaky fillers include mica, glass flake and various metal foils. Particularly, the use of a filler mainly composed of glass fiber, glass bead or glass flake is generally preferred.

These inorganic fillers (D) may be used alone or as a mixture of two or more of them. The simultaneous use of glass fiber or carbon fiber, with a granular or flaky filler is particularly effective in producing an article which exhibits excellent mechanical strength in addition to desirable dimensional accuracy and electrical properties.

If necessary, a sizing agent or surface treatment may be used with such fillers, with examples being functional compounds, such as epoxy and isocyanate compounds. These functional compounds may be applied to the filler prior to the preparation of the composition or may be added during preparation of the composition.

According to the present invention, the amount of the inorganic filler component (D) to be added to the polyester base resin is below 1 to 60% by weight, preferably between 5 to 50% by weight based on the total amount of the composition. If the amount exceeds 60% by weight, the resulting composition will be difficult to mold and its mechanical properties will be affected. The amount of the functional surface treatment that may be simultaneously used is between 0 to 10% by weight, preferably between 0.05 to 5% by weight based on the weight of the inorganic filler.

The compositions of the present invention may optionally contain small amounts of other thermoplastic resins depending upon the properties that are desired. Examples thereof include ethylene-acrylate copolymers, polyamide, polyacetal, polystyrene, styrene-butadiene copolymers, styrene-butadiene-acrylonitrile copolymers, styrene-butadiene-acrylic acid (or esters thereof) copolymers, styrene-acrylonitrile copolymers, polycarbonate, polyurethane, polyphenylene oxide, polyphenylene sulfide, polybutadiene, halogenated polyolefin, polyvinyl chloride, butyl rubbers and multi-layered graft copolymers mainly composed of polyacrylate.

The compositions of the present invention may also suitably contain additives which are conventionally used in thermoplastic or thermosetting resin compositions, thereby to attain desired characteristics and/or properties in dependence, for example, upon the end use application for the resin. Examples of such additives include stabilizers, such as anti-oxidants, heat stabilizers and ultraviolet absorbers; antistatic agents; lubricants; mold release agents; coloring agents such as dyes and pigments; lubricating agents; plasticizers; crystallization promoters and nucleating agents.

The compositions of the present invention cab be prepared by conventional processes used to prepare typical resin blends and with conventional processing equipment. For example, the necessary components may be mixed together, kneaded and then extruded using a conventional screw extruder to obtain a pellet that can thereafter be molded. Alternatively, pellets which are different from each other in composition may be mixed with one another at a predetermined ratio. The pellet mixture can then be molded into an article. In addition, one or more of the necessary components may be fed directly into a molding machine. It is preferred, however, that part of the resin components be in powder form and mixed with the other components prior to molding so as to achieve a homogeneous composition.

The compositions obtained by adding suspension-polymerized PTFE (C) to a polyester resin composition containing either an organic halogenated flame retardant, or a halogen-containing flame-retardant polyester resin, exhibit significantly improved processing characteristics, such as reduced adhesion and clogging due to the agglomeration of the PTFE, as compared with compositions that include emulsion-polymerized PTFE. As a result, the compositions of this invention consistently exhibit high quality and can be prepared with enhanced productivity (e.g. since the extrusion properties thereof are enhanced). The compositions of this invention also exhibit excellent flame retardance, tensile strength and elongation properties, and thus may suitably be used to form electrical components (such as connectors, switches, relays and the like) requiring high drip resistance ($V_0$) according to UL Standard 94.

The present invention will be described in greater detail below by reference to the following nonlimiting Examples.

## Examples

The characteristics which will be described in the following Examples and Comparative Examples were determined by the following methods:

I. Extrusion test (observation during pelletization of the composition)

o Mixing properties

Various components were fed into a rocking mixer and mixed together for about 20 minutes and the state of the obtained mixture (the state of the PTFE dispersed in the mixture) was visually observed.

o Extrusion properties

The extrusion was carried out by the use of a twin screw vented extruder having an inner diameter of 30 mm fitted with a screw feeder (for the constant-rate feeding of raw materials and additives). The state of feeding into the extruder (adhesion of PTFE to the screw feeder or the hopper or clogging thereof with PTFE). the biting state and the state of the extrudate (strand breaking or surging) were visually observed and qualitatively evaluated according to the following five ratings:

5 ————————— 4 ——————————— 3 ——————————— 2 ——————————— 1

none ← adhesion & clogging in screw feeder → significant
(good)                                                    (bad)
adhesion and clogging in hopper
breaking and surging of strand

II. Tensile test:

according to ASTM D 638

III. Burning test (UL-94)

Five test pieces (thickness: 0.8mm, 1/32 inch) were examined for burning characteristics and drip resistance during burning according to Subject 94 of Underwriters' Laboratories (UL-94).

Examples 1 to 7 and Comparative Examples 1 to 4

Polybutylene terephthalate (A) having an intrinsic viscosity of 1.0 was mixed with a halogenated flame retardant (B), an auxiliary flame retardant and a PTFE resin (C) prepared by suspension polymerization each listed in Table 1 by the use of a rocking mixer in proportions given in Table 1, and the mixture was pelletized with an extruder.

The pellet was injection molded to obtain a test piece. This test piece was examined for mechanical properties and burning characteristics. The results are shown in Table 1.

For comparison, the same procedure as that described above was repeated except that a PTFE resin (C′) prepared by emulsion polymerization not according to the present invention was used. The results are also shown in Table 1.

Table 1

| | | Unit | Example No. | | | | | | |
|---|---|---|---|---|---|---|---|---|---|
| | | | 1 | 2 | 3 | 4 | 5 | 6 | 7 |
| Composition | (A) polybutylene terephthalate | wt.% | 77.5 | 77.5 | 77.5 | 77.7 | 80.5 | 80.5 | 80.5 |
| | (B) brominated epoxy-modified resin | " | 18.0 | 18.0 | 18.0 | 18.0 | - | - | - |
| | (B) decabromodiphenyl ether | " | - | - | - | - | 14.0 | 14.0 | 14.0 |
| | antimony trioxide | " | 4.0 | 4.0 | 4.0 | 4.0 | 5.0 | 5.0 | 5.0 |
| | (C) polytetrafluoroethylene (prepared by suspension polymerization*) | | | | | | | | |
| | C-1 | " | 0.5 | - | - | - | 0.5 | - | - |
| | C-2 | " | - | 0.5 | - | - | - | 0.5 | - |
| | C-3 | " | - | - | 0.5 | 0.3 | - | - | 0.5 |
| | polytetrafluoroethylene (prepared by emulsion polymerization*) | | | | | | | | |
| | C'-1 | " | - | - | - | - | - | - | - |
| | C'-2 | " | - | - | - | - | - | - | - |
| Quality (properties) | extrusion test — mixing properties | - | good | good | good | good | good | good | good |
| | extrusion test — extrusion properties | - | 5 | 5 | 5 | 5 | 5 | 5 | 5 |
| | tensile strength | $kg/cm^2$ | 607 | 605 | 608 | 603 | 609 | 613 | 607 |
| | tensile elongation | % | 23.1 | 21.3 | 24.3 | 24.0 | 28.9 | 27.3 | 30.8 |
| | burning test — UL-94 $V_0$ | - | passed | passed | passed | passed | passed | passed | passed |
| | burning test — number of drips | drip | 0 | 0 | 0 | 0 | 0 | 0 | 0 |

EP 0 391 731 A2

| Comparative Example No. | | | |
|---|---|---|---|
| 1 | 2 | 3 | 4 |
| 77.5 | 77.5 | 80.5 | 80.5 |
| 18.0 | 18.0 | - | - |
| - | - | 14.0 | 14.0 |
| 4.0 | 4.0 | 5.0 | 5.0 |
| - | - | - | - |
| - | - | - | - |
| - | - | - | - |
| 0.5 | - | 0.5 | - |
| - | 0.5 | - | 0.5 |
| significant agglomeration 2 | significant agglomeration 2 | significant agglomeration 1 | significant agglomeration 2 |
| 595 | 601 | 605 | 603 |
| 17.1 | 16.8 | 23.0 | 23.5 |
| not passed | not passed | not passed | not passed |
| 2 | 3 | 2 | 2 |

*) C-1: Hostaflon TF 1740, a product of Hoechst, average particle size: about 40μm (prepared by grinding primary particle)

C-2: Hostaflon TF 1400, a product of Hoechst, average particle size: about 400μm (prepared by grinding primary particle)

C-3: Hostaflon TF 1640, a product of Hoechst, average particle size: about 400μm (prepared by granulating C-1)

C'-1: Teflon 6-J, a product of Du Pont, average particle size: about 300μm (prepared by secondary agglomeration)

C'-2: Hostaflon TF 2021, a product of Hoechst, average particle size: about 400μm (prepared by secondary agglomeration)

| Comparative Example No. | | | | |
|---|---|---|---|---|
| 5 | 6 | 7 | 8 | 9 |
| 53.5 | 53.5 | 53.5 | 55.5 | 55.5 |
| 10 | 10 | 10 | - | - |
| - | - | - | 8.0 | 8.0 |
| 6.0 | 6.0 | 6.0 | 6.0 | 6.0 |
| - | - | - | - | - |
| - | - | - | - | - |
| - | - | - | - | - |
| 0.5 | - | 0.5 | 0.5 | - |
| - | 0.5 | - | - | 0.5 |
| 30 | 30 | - | 30 | 30 |
| - | - | 30 | - | - |
| significant agglomeration | significant agglomeration | significant agglomeration | significant agglomeration | significant agglomeration |
| 2 | 2 | 2 | 2 | 2 |
| 1390 | 1390 | 540 | 1380 | 1375 |
| 2.0 | 2.1 | 2.0 | 2.2 | 2.3 |
| not passed | not passed | not passed | not passed | not passed |
| 3 | 2 | 2 | 1 | 2 |

*) C-1: Hostaflon TF 1740, a product of Hoechst, average particle size: about 40μm (prepared by grinding primary particle)

C-2: Hostaflon TF 1400, a product of Hoechst, average particle size: about 400μm (prepared by grinding primary particle)

C-3: Hostaflon TF 1640, a paorduct of Hoechst, average particle size: about 400μm (prepared by granulating C-1)

C'-1: Teflon 6-J, a product of Du Pont, average particle size: about 300μm (prepared by secondary agglomeration)

C'-2: Hostaflon TF 2021, a product of Hoechst, average particle size: about 400μm (prepared by secondary agglomeration)

EP 0 391 731 A2

Examples 8 to 11 and Comparative Examples 5 to 9

Polybutylene terephthalate (A) having an intrinsic viscosity of 0.8 was mixed with a halogenated flame retardant (B), an auxiliary flame retardant, an inorganic filler (D) and a PTFE resin (C) prepared by suspension polymerization each listed in Table 2 in proportions given in Table 2. The obtained mixture was examined for mechanical properties and burning characteristics in a similar manner to that described in Example 1. The results are shown in Table 2.

Table 2

| | | | | Example No. | | | |
|---|---|---|---|---|---|---|---|
| | | | Unit | 8 | 9 | 10 | 11 |
| Composition | (A) polybutylene terephthalate | | wt.% | 53.5 | 53.5 | 53.5 | 55.5 |
| | (B) brominated epoxy-modified resin | | wt.% | 10 | 10 | 10 | - |
| | (B) ethylenebistetrabromophthalimide | | wt.% | - | - | - | 8.0 |
| | antimony trioxide | | wt.% | 6.0 | 6.0 | 6.0 | 6.0 |
| | (C) polytetrafluoroethylene (prepared by emulsion polymerization*) | | | | | | |
| | C-1 | | wt.% | 0.5 | - | - | - |
| | C-2 | | wt.% | - | - | - | - |
| | C-3 | | wt.% | - | 0.5 | 0.5 | 0.5 |
| | polytetrafluorethylene (prepared by emulsion polymerization*) | | | | | | |
| | C′-1 | | wt.% | - | - | - | - |
| | C′-2 | | wt.% | - | - | - | - |
| | (D) glass fiber | | wt.% | 30 | 30 | - | 30 |
| | (D) glass bead | | wt.% | - | - | 30 | - |
| Quality (properties) | extrusion test | mixing properties | - | good | good | good | good |
| | | extrusion properties | - | 5 | 5 | 5 | 5 |
| | tensile strength | | kg/cm$^2$ | 1400 | 1395 | 550 | 1385 |
| | tensile elongation | | % | 2.6 | 2.7 | 2.6 | 2.9 |
| | burning test | UL-94 $V_0$ | - | passed | passed | passed | passed |
| | | number of drips | drips | 0 | 0 | 0 | 0 |

Example 12 and Comparative Examples 10 and 11

Brominated polybutylene terephthalate (A′) having an intrinsic viscosity of 0.85 and a bromine content of 6.5% by weight was mixed with an auxiliary flame retardant, an inorganic filler (D) and a PTFE resin (C) prepared by suspension polymerization each listed in Table 3 in proportions given in Table 3. The obtained mixture was examined for mechanical properties and burning characteristics in a similar manner to that described in Example 1. The results are shown in Table 3.

For comparison, the same procedure as that described above was repeated except that PTFE (C') prepared by emulsion polymerization was used. The results are also shown in Table 3.

Table 3

| | | | | Example No. | Comparative Example No. | |
|---|---|---|---|---|---|---|
| | | | Unit | 12 | 10 | 11 |
| Composition | (A') brominated polybutylene terephthalate | | wt.% | 64.5 | 64.5 | 64.5 |
| | antimony trioxide | | wt.% | 5.0 | 5.0 | 5.0 |
| | (C) polytetrafluoroethylene (prepared by suspension polymerization*) | | | | | |
| | C-3 | | wt.% | 0.5 | - | - |
| | polytetrafluoroethylene (prepared by emulsion polymerization*) | | | | | |
| | C'-1 | | wt.% | - | 0.5 | - |
| | C'-2 | | wt.% | - | - | 0.5 |
| | (D) glass fiber | | wt.% | 30 | 30 | 30 |
| Quality (properties) | extrusion test | mixing properties | - | good | slight agglomeration | slight agglomeration |
| | | extrusion properties | - | 5 | 3 | 3 |
| | tensile strength | | kg/cm$^2$ | 1388 | 1381 | 1385 |
| | tensile elongation | | % | 2.5 | 2.0 | 1.9 |
| | burning test | UL-94 $V_0$ | - | passed | not passed | not passed |
| | | number of drips | drips | 0 | 1 | 1 |

*) C-3: Hostaflon TF 1640, a product of Hoechst, average particle size: about 400$\mu$m (prepared by granulating C-1)

C'-1: Teflon 6-J, a product of Du Pont, average particle size: about 300$\mu$m (prepared by secondary agglomeration)

C'-2: Hostaflon TF 2021, a product of Hoechst, average particle size: about 400$\mu$m (prepared by secondary agglomeration)

EP 0 391 731 A2

While the invention has been described in connection with what is presently considered to be the most practical and preferred embodiment, it is to be understood that the invention is not to be limited to the disclosed embodiment, but on the contrary, is intended to cover various modifications and equivalent arrangements included within the spirit and scope of the appended claims.

## Claims

1. A flame-retardant polyester resin composition comprising:
(A/B) a flame-retardant thermoplastic polyester resin, and
(C) 0.05 to 5% by weight (based on the total weight of the composition) of a suspension-polymerized PTFE resin.

2. A flame-retardant polyester resin composition as claimed in claim 1, wherein the flame-retardant thermoplastic polyester resin (A/B) comprises:
(A) a thermoplastic polyester resin and
(B) 1 to 30% by weight (based on the total weight of the composition) of a halogenated flame retardant.

3. A flame-retardant polyester resin composition as claimed in claim 1, wherein the flame-retardant thermoplastic polyester resin (A/B) comprises:
(A') a thermoplastic polyester resin containing, in its molecular structure, halogen atoms in an amount to provide a halogen content (B') of 0.5 to 30% by weight (based on the weight of the resin (A')).

4. A flame-retardant polyester resin composition as claimed in any preceding claim, wherein the thermoplastic polyester resin (A) includes polybutylene terephthalate.

5. A flame-retardant polyester resin composition as claimed in any preceding claim, wherein the suspension-polymerized PTFE resin (C) is in the form of granules having an average size in the range of $10\mu m$ to $1000\mu m$.

6. A flame-retardant polyester resin composition as claimed in claim 5, wherein the granules of suspension-polymerized PTFE resin (C) have an average size in the range of $100\mu m$ to $800\mu m$.

7. A flame-retardant polyester resin composition as claimed in any preceding claim, which further comprises:
(D) 1 to 60% by weight (based on the total weight of the composition) of at least one inorganic filler.

8. A flame-retardant polyester resin composition as claimed in claim 7, wherein the inorganic filler (D) is at least one selected from the group consisting of glass fibers, glass beads, and glass flakes.

9. A process for preparing a flame-retardant polyester resin composition which comprises blending:
(A/B) a flame-retardant thermoplastic polyester resin, and
(C) 0.05 to 5% by weight (based on the total weight of the composition) of a suspension-polymerized PTFE.

10. A process for preparing a flame-retardant polyester resin composition as claimed in claim 9, characterized in that the PTFE resin (C) is added as granules having an average size in the range of $10\mu m$ to $1000\mu m$ which are prepared by pulverizing the suspension-polymerized resin and agglomerating the pulverized resin.